# EUROPÄISCHE PATENTSCHRIFT

(11) **EP 2 368 435 B1**
(45) Veröffentlichungstag und Bekanntmachung des Hinweises auf die Patenterteilung: **25.11.2020**
(21) Anmeldenummer: 11002139.1
(22) Anmeldetag: 15.03.2011
(51) Int. Cl.: A22C 13/00

(54) **Schlauchförmige Nahrungsmittelhülle beschichtet mit aufschmelzbaren, thermoplastischen Polymeren**
Tubular foodstuff container coated with meltable thermoplastic polymers
Enveloppe d'aliments tubulaires revêtue de polymères fusibles thermoplastiques

(30) Priorität: 25.03.2010 DE 102010012633
(43) Veröffentlichungstag der Anmeldung: 28.09.2011
(73) Patentinhaber: Kalle GmbH, 65203 Wiesbaden (DE)
(72) Erfinder: Fögler, Jens, 65232 Taunusstein (DE); Seelgen, Michael, 65510 Idstein (DE); Delius, Ulrich, 60529 Frankfurt (DE)
(74) Vertreter: Plate, Jürgen

(56) Entgegenhaltungen:
- EP-A1- 0 060 926
- US-A- 3 922 398
- US-A- 5 273 482
- US-A1- 2004 253 398
- DIN DEUTSCHES INSTITUT FÜR NORMUNG E.V.: "DIN EN ISO 1133 Determination of the melt mass-flow rate (MFR) and the melt volume-flow rate of thermoplastics", DIN-NORMEN, Bd. 2000-02, Nr. 1110, Februar 2000 (2000-02), XP002699736, Berlin

## Beschreibung

Die Erfindung betrifft eine schlauchförmige Nahrungsmittelhülle mit einem flächenförmigen, faserigen Trägermaterial, das mit thermoplastischem Kunststoff beschichtet ist. Die Nahrungsmittelhülle ist insbesondere vorgesehen als künstliche Wursthülle.

Schlauchförmige Nahrungsmittelhüllen der eingangs genannten Gattung sind bekannt und zahlreich beschrieben. Hergestellt werden sie durch Beschichten eines faserigen, insbesondere eines textilen Trägermaterials. Beschichtet wird allgemein mit wäßrigen Dispersionen. Häufig werden dabei Acrylat-Dispersionen eingesetzt. Solche mit Acrylat-Dispersionen beschichtete Hüllen mit textilem Trägermaterial sind beispielsweise in der DE 37 04 563 C2 und in der DE 31 47 519 beschrieben. Nach dem Beschichten erfolgt üblicherweise ein Trocknungsschritt. In weiteren Bearbeitungsschritten werden die beschichteten Trägermaterialien durch Nähen, Kleben, Siegeln oder auf andere übliche Weisen zu schlauchförmigen Hüllen konfektioniert.

Bekannt sind auch Cellulose-Faserdärme mit einer PVDC-Innenbeschichtung (s. beispielsweise EP 0 904 700 A1). Hergestellt wird die Innenbeschichtung mit einer wäßrigen Dispersion eines Vinylidenchlorid-Copolymers. Cellulose-Faserdärme enthalten eine Verstärkung aus einem Faserpapier, insbesondere einem Papier aus Hanf- oder Abacafasern. Mit dem Beschichten ist zwangsläufig ein Trocknungsschritt verbunden.

In der EP 0 060 926 A1 ist eine schlauchförmige Hülle auf Basis von regenerierter Cellulose offenbart, die mit einer flächenförmigen Fasereinlage verstärkt ist. Bei deren Herstellung wird ein flächenförmiges Fasermaterial zu einem Schlauch geformt, der mit thermoplastischem Kunststoff, beispielsweise einem Hotmelt-Kunststoff, beschichtet wird. Auf die Außenseite des Schlauchs wird Viskose aufgebracht, die nachfolgend zu Cellulosehydrat regeneriert wird.

Eine Hülle auf Basis von regenerierter Cellulose ist auch in der US 3,922,398 offenbart. Bei der Herstellung der Hülle wird ein Faserpapier zu einem Schlauch geformt, wobei ein Teil des Schlauchs mit einem Klebestreifen abgedeckt wird, beispielsweise einem Klebestreifen aus Polymerfolie. Der Schlauch wird dann mit Viskose beschichtet. Das Abdeckband wird entfernt bevor der beschichtete Schlauch in die Koagulations- und Regenerationsbäder gelangt. Durch nicht beschichtete (weil zuvor abgedeckte) Bereiche der Hülle können die Flüssigkeiten der Koagulations-, Regenerations- und Waschbäder zirkulieren. Nach dem Durchlaufen dieser Bäder wird auf die unbeschichtet gebliebenen Bereiche des Cellulosefaserdarms eine Schicht aus einem flexiblen, filmbildenden Material aufgebracht. Dieses Material ist beispielsweise Gelatine, Alginat oder ein Hotmelt-Polymer.

Gegenstand der US 5,273,482 ist eine schlauchförmige Nahrungsmittelhülle mit mindestens einem koaxial um die Hülle verlaufenden Verstärkungsband. Als Verstärkungsbänder können dabei auch Streifen aus Polymerfolie dienen, die mit Hotmelt-Kleber versehen sind. Die Hülle selbst kann eine faserverstärkte Cellulosehydrathülle oder eine Polymerhülle sein.

In der US 2004/0253398 A1 ist eine schlauchförmige Nahrungsmittelhülle mit einer porösen äußeren Hülle und einer für Flüssigkeit im wesentlichen undurchlässigen inneren Hülle beschrieben. Die äußere Hülle besteht aus einem Gestricke, bevorzugt aus einem Jersey-Stoff. Die äußere Hülle ist mit der inneren verbunden durch eine Klebstoffschicht. Der Klebstoff kann ein Hotmelt-Kleber sein.

Bekannt sind schließlich auch schlauchförmige Textildärme, auf deren Innenseite vollflächig eine Folie aus thermoplastischem, siegelfähigem oder schweißbaren Kunststoff aufkaschiert oder auflaminiert ist (DE 10 2004 048 057 A1). Die Folie kann aus Polyester, Polyamid, Polyolefin oder anderen thermoplastischen Kunststoffen bestehen. Sie kann verstreckt oder unverstreckt sein. Die Verbindung zwischen der Folie und dem textilen Trägermaterial ist jedoch nicht in jedem Fall zufriedenstellend, denn die Polymere der Folie umschließen nicht die Fasern.

Die bei der Dispersionsbeschichtung eingesetzten Dispersionen enthalten in der Regel 50 bis 60 Gew.-% an Feststoff, der Rest besteht im wesentlichen aus Wasser. Somit ist bei der Trocknung eine erhebliche Wassermenge zu verdampfen. Dies ist energetisch sehr aufwendig und teuer. Weiterhin sind hierfür Trockner mit einer großen Länge erforderlich. Somit ist ein hoher Platzbedarf für eine solche Dispersionbeschichtungsanlage erforderlich. Weiterhin sind zur Bedienung einer solchen Anlage mehrere Personen erforderlich. Die Beschichtungsdispersionen müssen vor der Beschichtung nach einer bestimmten Rezeptur angesetzt werden. Hierzu wird ebenfalls Personal benötigt. Ebenso ist aufgrund des Dispersionsansatzes und der Trocknung eine Belastung der Umwelt vorhanden.

Aufgabe der Erfindung ist es, ausgehend von der EP 0 060 926 A1, eine Hülle zu entwickeln die die oben genannten Nachteile am heutigen Stand der Technik deutlich reduziert. Insbesondere soll bei Herstellung kein Trocknen mehr erforderlich sein. Das senkt den apparativen Aufwand und spart Energie.

Gefunden wurde nunmehr, dass sich die Beschichtung aus thermoplastischem Kunststoff mit Hotmelt-Polymeren sehr viel besser realisieren läßt als mit einer wäßrigen Polymer-Dispersion oder einer Folie aus thermoplastischen Polymeren.

Gegenstand der vorliegenden Erfindung ist demgemäß eine Nahrungsmittelhülle nach Anspruch 1 mit einem flächenförmigen Trägermaterial und einer darauf befindlichen durchgehenden, d.h. einer vollflächigen Beschichtung aus linearen thermoplastischen Polymeren, wobei die Beschichtung als wesentlichen Bestandteil mindestens ein Hotmelt-Polymer umfaßt.

Als Hotmelt-Polymere werden im Zusammenhang mit der vorliegenden Erfindung Polymere bezeichnet mit einem Schmelzflußindex (= Volumenschmelzindex, MVR) im Bereich von 25 bis 500 cm³ pro 10 min, gemessen bei 190°C mit einer Last von 2,16 kg gemäß DIN 1133. Hotmelt-Polymere sind damit unter der Einwirkung von Hitze und Belastung wesentlich "dünnflüssiger" als übliche thermoplastische Polymere, wie sie beispielsweise für Kunststoff-Folien eingesetzt werden. Der MVR läßt sich auch noch an der fertigen Hülle bestimmen.

Die Hotmelt-Polymere bilden den wesentlichen Bestandteil der Beschichtung, d.h. ihr Anteil beträgt bevorzugt mindestens 50 Gew.-%, besonders bevorzugt mindestens 75 Gew.-%, speziell mindestens 90 Gew.-%, jeweils bezogen auf das Gesamtgewicht der Beschichtung. Ebenfalls möglich sind Typen mit einem Bestandteil von Hotmelt-Polymeren von 100%.

Bei Verwendung von Hotmelt-Polymeren anstelle von wäßrigen PolymerDispersionen entfällt der Trocknungsschritt. Die Nahrungsmittelhüllen lassen sich daher mit höherer Maschinengeschwindigkeit herstellen. Herstellkosten, Anlagenkosten, Personalkosten und Umweltkosten werden somit deutlich reduziert.

Als Ausgangsmaterial zur Herstellung der schlauchförmigen Umhüllung können verschiedenste Materialien verwendet werden. Das Trägermaterial umfaßt als Grundmaterial ein Gewebe, Gewirke, Papier, verfestigtes Vlies oder Spinnvlies aus Naturfaser, synthetischen Fasern oder Gemischen davon.

Geeignete Naturfasern sind beispielsweise Baumwollfasern, Cellulosefasern (z.B. Leinen), Wolle oder Seide. Auch aus Biopolymeren abgeleitete Materialien können zu geeigneten Fasern verarbeitet werden. Hier sind beispielsweise Fasern aus Regenerat-Cellulose (= Zellwolle) zu nennen. Geeignete synthetische Fasern sind beispielsweise aus Polyamid, Polyester, Polyolefin (speziell Polypropylen), Polyvinylacetat, Polyacrylnitril, Polyvinylchlorid, Polyvinylidenchlorid bzw. aus den entsprechenden Copolymeren hergestellt. Die Dicke, bzw. das Flächengewicht sowie die Werkstoffwahl des Trägermaterials ist abhängig von der späteren Verwendung. Allgemein beträgt das Flächengewicht zwischen 3 bis 400 g/m², bevorzugt 20 bis 130 g/m². Das Flächengewicht ist vorzugsweise so bemessen, dass das Trägermaterial selbsttragend ist.

Diese Trägermaterialien werden mit aufschmelzbaren Polymeren, sogenannten Hotmelts, beschichtet. Diese Hotmelts liegen beispielsweise als Granulat, Patronen oder Blöcke vor und werden bei bestimmten Temperaturen aufgeschmolzen. Dies geschieht vorzugsweise in einem Extruder, Tank- oder Faßschmelzer. Die aufgeschmolzenen Medien werden vorzugsweise über eine Pumpe (z.B. Zahnradpumpe) zu einem Beschichtungswerk geführt. Als Beschichtungssystem können beispielsweise die folgenden Systeme zum Einsatz kommen: Düsenauftrag (Kontakt oder Curtain), Walzenauftrag, Sprühauftrag, etc. Beim Kontaktauftrag besteht ein Materialkontakt zwischen Düsenlippe und Trägermaterial. Beim Curtain-Coating ist eine Breitschlitzdüse in einem gewissen Abstand zum Trägermaterial montiert, das Hotmelt fließt aus der Düse wie ein "Vorhang" herab, durch den das Trägermaterial hindurchgeführt wird. Somit besteht keine Berührung von Trägermaterial und Düse. Für die Hotmeltbeschichtung sind komplett beheizte Systeme erforderlich. Das Trägermaterial wird allgemein nur von einer Seite beschichtet.

Die Hotmelts basieren auf linearen (Co-)Polymeren, welche im Unterschied zu den bekannteren, als thermoplastische Kunststoffe bezeichneten Polymeren niedrige Viskositäten in der Schmelze besitzen. Die Viskosität kann z.B. als sog. Schmelzvolumenrate ("MVR", Messung erfolgt gemäß DIN 1133) angegeben werden. Typisch für Hotmelts sind MVR-Werte im Bereich von 25 bis 500 cm³ pro 10 min, gemessen bei 190°C mit einer Last von 2,16 kg, während (niedrigschmelzende) thermoplastische Kunststoffe Werte im Bereich von 5 bis 25 cm³ pro 10 min (unter gleichen Bedingungen gemessen) aufweisen. Bevorzugt liegt der MVR-Wert der Hotmelt-Polymere im Bereich von 100 bis 450 cm³ pro 10 min, besonders bevorzugt im Bereich von 150 bis 400 cm³ pro 10 min, jeweils gemessen nach DIN 1133 bei 190 °C und einer Last von 2,16 kg. Die Hotmelt-Polymere dringen daher in das textile Trägermaterial ein, umschließen einzelne Fasern (teilweise oder komplett), auch im Innern des Trägermaterials, und füllen den Raum zwischen den Fasern mehr oder weniger vollständig aus. Eine auflaminierte Folie ist dagegen nur mit der Oberfläche des textilen Trägermaterials verbunden.

Zwecks Abgrenzung der Hotmelt-Polymere zu thermoplastischen Kunststoffen seien hier Polyamid-Thermoplaste genannt, wie sie für extrudierte Folien eingesetzt werden. Bei letzteren wird der MVR - auch bedingt durch deren höhere Schmelzpunkte - unter anderen Bedingungen gemessen, üblicherweise bei 275°C und 10 kg Belastung. Hierbei ergeben sich typischerweise MVR-Werte im Bereich 40 bis 200 cm³ pro 10 min. Hotmelt-Polymere wären unter diesen Bedingungen kaum vermessbar, da deren Fließgeschwindigkeit dann extrem hoch und keine exakte Volumenerfassung mehr möglich wäre.

Als Hotmelt-Polymere sind für die Beschichtung beispielsweise geeignet: Polyester, Copolyester, Polyolefine, bevorzugt Polyethylen (speziell HD-PE, MD-PE oder LD-PE) oder Polypropylen, Ethylen/Vinylacetat-Copolymere, Acetal-(Co)Polymere wie z.B. Polyvinylbutyral, Polyamide, Copolyamide, Vinylidenchlorid-Copolymere ("PVDC"), schmelzbare Polyurethane (PUR), letztere auch als Reaktiv-System, d.h. chemisch nachvernetzend. Die (Co)Polyamide sind bevorzugt aliphatisch.

Die Hotmelts können diese Polymere einzeln oder auch als Gemisch enthalten. In kleinen Mengen können zusätzlich übliche Additive enthalten sein, wie Hitzestabilisatoren, Fließhilfsmittel, Adhäsionsverbesserer, Füllstoffe und Farbpigmente.

In der Beschichtung bzw. in den Beschichtungen ist keine regenerierte oder gefällte Cellulose enthalten, allenfalls Cellulosepulver kann als Füllstoff in untergeordneten Mengen (< 5 Gew.-%, bezogen auf das Gewicht der Schicht) vorkommen.

Die Hotmelts werden vollflächig aufgebracht, so dass sich eine durchgehende Beschichtung bildet. Die Auftragsgewichte liegen hierbei allgemein zwischen 3 bis 200 g/m², bevorzugt zwischen 15 bis 100 g/m², besonders bevorzugt zwischen 25 und 60 g/m². Durch die Auswahl der Beschichtungsmedien können die späteren Eigenschaften der Hülle eingestellt werden. Bei Rohwurstanwendung beträgt die Wasserdampfdurchlässigkeit zweckmäßig 1000 bis 1500 g/m² d, bevorzugt 1200 bis 1400 g/m² d, die Sauerstoffdurchlässigkeit beträgt zweckmäßig 20 bis 150 cm³/m² d, bevorzugt 35 bis 50 cm³/m² d. Bei Koch- und/oder Brühwurstanwendung beträgt die Wasserdampfdurchlässigkeit zweckmäßig etwa 1 bis 50 g/m² d, bevorzugt etwa 5 bis 40 g/m² d, die Sauerstoffdurchlässigkeit 20 bis 100 cm³/m² d, bevorzugt 30 bis 80 cm³/m² d.

Die Beschichtungsmedien werden vorzugsweise auf der Außenseite angetragen. Jedoch ist auch ein Antrag auf der Innenseite oder der Innen- und Außenseite möglich. In der bevorzugten Ausführungsform wird nur eine Hotmelt-Schicht auf das Trägermaterial aufgetragen. Es können auch mehrere Hotmelts gleicher oder verschiedener Zusammensetzung nacheinander aufgetragen werden, so dass die Beschichtung mehrere Schichten umfaßt.

Bei Beschichtung mit zwei oder mehr Schichten (im Zusammenhang mit der vorliegenden Erfindung als "mehrschichtige" Hülle bezeichnet) kann durch die Auswahl der Beschichtungsprodukte das Eigenschaftsbild der Hülle bestimmt werden. So ist es beispielsweise möglich den Träger zunächst zur Erzielung einer niedrigen Sauerstoffdurchlässigkeit mit einer ersten Schicht aus einem Polyamid zu beschichten und in der zweiten Schicht zur Erzielung einer hohen Wasserdampfdichtigkeit mit einem Polyolefin zu beschichten. Bei der erfindungsgemäßen Hülle befindet sich eine Hotmelt-Beschichtung direkt auf mindestens einer Seite des faserigen Trägermaterials. Weitere Schichten bei der mehrschichtigen Hülle können Hotmelt-Schichten sein, sie können jedoch auch aus anderem Material und/oder auf andere Weise erzeugt sein, beispielsweise durch Dispersionsbeschichtung oder Auflaminieren einer Folie.

Der Auftrag der Beschichtungsschmelze erfolgt auf die Oberfläche des Trägermaterials. Je nach Kombination von Beschichtungsmedium und Trägermaterial kann es erforderlich sein, die Verbundhaftung von Trägermaterial und Hotmelt zu verbessern. Dies kann beispielsweise durch Anlegen eines Unterdrucks erfolgen. Dabei wird der Unterdruck unterhalb der Stelle erzeugt an welcher die Beschichtung auf die Trägerbahn trifft. Somit wird die noch flüssige Beschichtung mit Unterdruck auf und in das Trägermaterial gesaugt. Dabei werden gleichzeitig etwaige Luftpolster eliminiert. Eine weitere Möglichkeit zur Verbesserung der Verbundhaftung kann durch eine Vorwärmung des Trägermaterials erfolgen. Dabei wird das Trägermaterial direkt vor dem Hotmelt-Auftrag erwärmt, wodurch die Temperaturdifferenz zwischen Schmelze und Träger reduziert wird. Somit wir das Erstarren des Hotmelts auf der Trägeroberfläche verzögert und eine mechanische Verankerung begünstigt.

Eine weitere Möglichkeit zur Beeinflussung der Oberflächeneigenschaften (z.B. Dichtigkeit, Haftung) kann durch Kalandrieren erfolgen. Beim Kalandrieren wird der Verbund aus Träger und Beschichtung miteinander verpresst, gegebenenfalls unter Erwärmen oder Erhitzen. Das Kalandrieren des Verbundes ist unter Zuhilfenahme der Restwärme aus dem Hotmeltauftrag möglich. Auch kann das Kalandrieren nach dem Erkalten des Beschichtungsmediums erfolgen. Das Kalanderergebnis kann durch Druck, Temperatur, Geschwindigkeit bzw. eine Kombination dieser Parameter beeinflußt werden.

Eine weitere Möglichkeit zur Verbesserung der Verbundhaftung beispielsweise bei Zellwollgeweben ist eine Imprägnierung mit einem Kontaktmittel. Das Kontaktmittel wird in die Zwischenräume des Gewebes gedrückt und dient als Haftvermittler für die Hotmelt-Polymere. Das Kontaktmittel wird in einer im Vergleich zum Gewicht der Hotmelt-Polymere geringen Menge aufgebracht. Es bildet keine durchgehende Beschichtung. Die poröse, faserige Struktur des Trägermaterials bleibt dabei erhalten.

Weiterhin besteht die Möglichkeit, das Trägermaterial mit einem Haftvermittler zu versehen um eine bessere Haftung des Hotmelts an der Trägerbahn zu erzielen.

Eine weitere Möglichkeit zur Verbesserung der Verbundhaftung besteht durch Entschlichten des Gewebes. Das Schlichtemittel, häufig Stärke oder ein Stärkederivat, wird dabei in einem wäßrigen Bad entfernt.

Die Beschichtung der Trägerbahn erfolgt zweckmäßig im flachen Zustand. In weiteren Bearbeitungsschritten wird die Flachware in einzelne Nutzen geschnitten und anschließend zu einer Hülle in gerader oder beliebiger Form (z.B. in Form eines sogenannten "Fettendes" oder mit einer wellenförmigen oder gebogenen Naht versehen) geklebt, genäht, geschweißt, gesiegelt oder auf andere Weise fest miteinander verbunden. Zur Verbesserung der Optik kann das beschichtete textile Trägermaterial abgenäht sein.

In einer weiteren Ausführungsform erfolgt die Beschichtung des Trägermaterials in einer Ringschlitzdüse. Dabei wird das Trägermaterial vor der Beschichtung über eine Formschulter zu einem Schlauch geformt, mit dem Beschichtungshotmelt verklebt und nachfolgend beschichtet.

Die erfindungsgemäße Nahrungsmittelhülle kann zu Raffraupen konfektioniert werden. Sie kann ferner zu Abschnitten konfektioniert werden, die einseitig verschlossen sind durch einen Clip, Clip mit Schlaufe, durch Abbinden, durch einen Knoten, durch Verkleben, durch Siegeln, Verschweißen, Abnähen mit einer geraden oder einer gebogenen Naht oder durch eine Kombination aus mehreren der genannten Verschlußarten.

Zur Erzielung einer farbigen Beschichtung kann das Hotmelt in der entsprechenden Farbe hergestellt werden. Eine weitere Möglichkeit der Farbgebung kann durch Zumischungen von farbigen Granulaten in das Beschichtungsgranulat erfolgen. Weiterhin ist der Einsatz eines eingefärbten Trägermaterials möglich.

Die nicht beschichtete Seite des Trägermaterials kann beispielsweise mit festen und/oder flüssigen Medien beschichtet oder imprägniert werden, die Aroma, Farbe und/oder Geschmack auf die Wurst übertragen. Besonders zu erwähnen ist diesem Zusammenhang Flüssig- und Trockenrauch.

In einer weiteren Ausführungsform kann die erste Schicht als Hotmelt-Beschichtung aufgetragen werden um beispielsweise eine Wasserdichtigkeit zu erzeugen. Eine oder mehrere weitere Schicht(en), beispielsweise zur Erzielung einer bestimmten Wasserdampf- bzw. Sauerstoffdurchlässigkeit, kann (können) danach durch eine Dispersionsbeschichtung aufgebracht werden.

Vorgesehen ist die Nahrungsmittelhülle gemäß der Erfindung insbesondere als künstliche Wursthülle, speziell für Roh-, Brüh- oder Kochwurst.

Die nachfolgenden Beispiele dienen zur Illustration der Erfindung. Prozente sind darin als Gewichtsprozente zu verstehen, soweit nicht anders angegeben oder aus dem Zusammenhang unmittelbar ersichtlich.

### Beispiel 1:

Ein Zellwollgewebe mit einem Flächengewicht von 80 g/m² wurde mit einem Polyester-Hotmelt (MVR: 50 cm³ pro 10 min bei einer Temperatur von 190 °C und einer Belastung von 2,16 kg, bestimmt gemäß DIN 1133; Schmelzviskosität bei 190 °C: 175000 mPa s; Dichte: 0,97 g/cm³) beschichtet. Der Auftrag des Hotmelts erfolgte durch Düsenbeschichtung bei 200 °C. Das Gewicht der Hotmelt-Beschichtung betrug 30 g/m². Die Verbundhaftung zwischen Hotmelt und Trägermaterial war sehr gut. Die Flachware wurde auf eine Breite von 200 mm geschnitten und anschließend zu einem Schlauch verklebt. Die Hülle wurde mit Leberwurstbrät gefüllt. Nach dem Füllen hatte die Wurst ein Kaliber von 63 mm. Die Verarbeitung der Hülle bzw. der gefüllten Wurst verlief über alle Prozesse (Füllen, Clippen, Kochen, Verpacken) ohne Beanstandung.

### Beispiel 2:

Ein Polyestergewebe mit einem Flächengewicht von 67 g/m² wurde mit einem aufgeschmolzenem PVDC-Hotmelt-Granulat (Schmelztemperatur 160 °C; Schmelzviskosität bei 175 °C: 750000 mPa s; Dichte: 1,7 g/cm³) beschichtet. Das Auftragsgewicht betrug 42 g/m². Somit ergab sich ein Gesamtgewicht von 109 g/m². An einer Probe wurde die Wasserdampf- und Sauerstoffdurchlässigkeit bestimmt. Die Wasserdampfdurchlässigkeit betrug 10 g/m² d, die Sauerstoffdurchlässigkeit 65 cm³/m² d. Die Flachbahn wurde geschnitten und zu einem Schlauch mit einem Durchmesser von 58 mm verklebt. Gefüllt wurde die Hülle mit einem feinen Leberwurstbrät. Der Gewichtsverlust nach dem Kochen betrug 1,5%.

## Patentansprüche

1. Schlauchförmige Nahrungsmittelhülle mit einem flächenförmigen textilen Trägermaterial und einer darauf befindlichen durchgehenden vollflächigen Beschichtung aus linearen thermoplastischen Polymeren, wobei das Trägermaterial aus einem Gewebe, Gewirke, Vlies, verfestigten Vlies aus Naturfasern, synthetischen Fasern oder einem Gemisch davon besteht, **dadurch gekennzeichnet, dass** die Beschichtung als wesentlichen Bestandteil mindestens ein lineares Hotmelt-Polymer umfaßt, jedoch keine gefällte oder regenerierte Cellulose enthält, und dass die Beschichtung die Außenseite der Hülle bildet, wobei das Hotmelt-Polymer einen MVR-Wert im Bereich von 25 bis 500 cm³ pro 10 min, gemessen bei 190°C unter einer Belastung von 2,16 kg, aufweist.

2. Nahrungsmittelhülle gemäß Anspruch 1, **dadurch gekennzeichnet, dass** das Hotmelt-Polymer einen MVR-Wert im Bereich von 100 bis 450 cm³ pro 10 min, speziell von 150 bis 400 cm³ pro 10 min, jeweils gemessen bei 190°C unter einer Belastung von 2,16 kg, aufweist, wobei das Hotmelt-Polymer bevorzugt Polyester, Polyolefin, besonders bevorzugt HD-PE, MD-PE, LD-PE oder Polypropylen, Copolyester, Ethylen/Vinylacetat-Copolymer, Polyvinylbutyral, Polyamid, Polyurethan, PVDC oder eine Mischung davon umfaßt.

3. Nahrungsmittelhülle gemäß Anspruch 1 oder 2, **dadurch gekennzeichnet, dass** das Trägermaterial aus Natur- und/oder Kunstfasern besteht, besonders bevorzugt aus Baumwolle, Zellwolle, Regenerat-Cellulose, Seide, Polyester, Polyamid, Polyolefin, Papier, Polyvinylacetat, Polyacrylnitril, Polyvinylchlorid, einem entsprechenden Copolymer oder einem Gemisch davon.

4. Nahrungsmittelhülle gemäß einem oder mehreren der Ansprüche 1 bis 3, **dadurch gekennzeichnet, dass** die flächenförmige Einlage ein Gewicht 3 bis 400 g/m², bevorzugt 10 bis 130 g/m², besonders bevorzugt 12 bis 75 g/m², aufweist.

5. Nahrungsmittelhülle gemäß einem oder mehreren der Ansprüche 1 bis 4, **dadurch gekennzeichnet, dass** sie zu einer Raupe gerafft oder zu Abschnitten konfektioniert ist, die einseitig verschlossen sind durch Clip, Clip mit Schlaufe, Abbindung, Knoten, Verklebung, Siegelung, Verschweißung, Abnähen mit einer geraden oder einer gebogenen Naht oder durch eine Kombination aus mehreren der genannten Verschlußverfahren.

6. Nahrungsmittelhülle gemäß einem oder mehreren der Ansprüche 1 bis 5, **dadurch gekennzeichnet, dass** der Schlauch aus einer Flachbahn durch Kleben, Nähen, Siegeln oder Schweißen in gerader oder anderer Form hergestellt ist.

7. Nahrungsmittelhülle gemäß einem oder mehreren der Ansprüche 1 bis 6, **dadurch gekennzeichnet, dass** die nicht beschichtete Seite des Trägermaterials mit mindestens einem festen und/oder flüssigen Medium imprägniert ist, das Aroma, Farbe und/oder Geschmack auf die Wurst überträgt, bevorzugt mit Flüssig- oder Trockenrauch.

8. Nahrungsmittelhülle gemäß einem oder mehreren der Ansprüche 1 bis 7, **dadurch gekennzeichnet, dass** das Trägermaterial und die Beschichtung ungefärbt ist, dass das Trägermaterial mit Farbstoffen oder Farbpigmenten eingefärbt ist, oder dass das Trägermaterial ungefärbt und eine gefärbte Beschichtung aufweist.

9. Nahrungsmittelhülle gemäß einem oder mehreren der Ansprüche 1 bis 8, **dadurch gekennzeichnet, dass** sie eine oder mehrere Schichten mit Barriereeigenschaften für Sauerstoff und/oder Wasserdampf aufweist.

10. Nahrungsmittelhülle gemäß einem oder mehreren der Ansprüche 1 bis 9, **dadurch gekennzeichnet, dass** sie auf der Innenseite eine Imprägnierung oder Beschichtung aufweist, die die Haftung an einem in der Hülle befindlichen Nahrungsmittel steuert.

11. Verfahren zur Herstellung einer Nahrungsmittelhülle gemäß einem oder mehreren der Ansprüche 1 bis 10, **dadurch gekennzeichnet, dass** zur Verbesserung der Verbundhaftung das Trägermaterial vorgewärmt wird und/oder das Trägermaterial mit Unterdruck beaufschlagt wird und/oder das Trägermaterial entschlichtet wird und/oder ein Haftvermittler verwendet wird und/oder der Verbund kalandert wird.

12. Verwendung der Nahrungsmittelhülle gemäß einem oder mehreren der Ansprüche 1 bis 10 als künstliche Wursthülle, bevorzugt für Roh-, Brüh- oder Kochwurst.

## Claims

1. Tubular food casing having a sheet-like textile support material and a continuous full-surface coating formed from linear thermoplastic polymers located thereupon, wherein the support material consists of a woven fabric, knitted fabric, nonwoven fabric, consolidated nonwoven fabric formed from natural fibres, synthetic fibres or a mixture thereof, **characterized in that** the coating comprises, as an essential constituent, at least one linear hotmelt polymer but does not contain any precipitated or regenerated cellulose, and **in that** the coating forms the outer side of the casing, the hotmelt polymer having an MVR value in the range from 25 to 500 cm³ per 10 min, measured at 190 °C under a load of 2.16 kg.

2. Food casing according to Claim 1, **characterized in that** the hotmelt polymer has an MVR value in the range from 100 to 450 cm³ per 10 min, especially from 150 to 400 cm³ per 10 min, in each case measured at 190 °C under a load of 2.16 kg, wherein the hotmelt polymer comprises preferably polyester, polyolefin, particularly preferably HDPE, MDPE, LDPE or polypropylene, copolyester, ethylene/vinyl acetate copolymer, polyvinyl butyral, polyamide, polyurethane, PVDC or a mixture thereof.

3. Food casing according to Claim 1 or 2, **characterized in that** the support material consists of natural and/or artificial fibres, particularly preferably of cotton, spun rayon, regenerated cellulose, silk, polyester, polyamide, polyolefin, paper, polyvinyl acetate, polyacrylonitrile, polyvinyl chloride, a corresponding copolymer or a mixture thereof.

4. Food casing according to one or more of Claims 1 to 3, **characterized in that** the sheet-like insert has a weight of 3 to 400 g/m², preferably 10 to 130 g/m², particularly preferably 12 to 75 g/m².

5. Food casing according to one or more of Claims 1 to 4, **characterized in that** it is shirred to form a shirred stick or end-processed into sections which are closed at one end by a clip, clip with loop, tie, knot, adhesive bond, seal, weld, stitch with a straight or a curved seam or by a combination of two or more of the closure techniques mentioned.

6. Food casing according to one or more of Claims 1 to 5, **characterized in that** the tube is produced from a flat web by gluing, stitching, sealing or welding in straight or other form.

7. Food casing according to one or more of Claims 1 to 6, **characterized in that** the uncoated side of the support material is impregnated with at least one solid and/or liquid medium which imparts aroma, colour and/or flavour upon the sausage, preferably with liquid smoke or dry smoke.

8. Food casing according to one or more of Claims 1 to 7, **characterized in that** the support material and the coating are uncoloured, **in that** the support material is coloured with dyes or colour pigments, or **in that** the support material is uncoloured and has a coloured coating.

9. Food casing according to one or more of Claims 1 to 8, **characterized in that** it has one or more layers having barrier properties for oxygen and/or water vapour.

10. Food casing according to one or more of Claims 1 to 9, **characterized in that** it has on the inner side an impregnation or coating which controls adhesion to a food situated within the casing.

11. Process for producing a food casing according to one or more of Claims 1 to 10, **characterized in that** for improving composite adhesion the support material is preheated and/or the support material is exposed to negative pressure and/or the support material is desized and/or an adhesion promoter is used and/or the composite is calendered.

12. Use of the food casing according to one or more of Claims 1 to 10 as an artificial sausage casing, preferably for raw sausage, scalded-emulsion sausage or cooked-meat sausage.

## Revendications

1. Enveloppe alimentaire tubulaire comprenant un matériau de support textile plat et un revêtement continu sur toute la surface se trouvant sur celui-ci composée de polymères thermoplastiques linéaires, le matériau de support consistant en un tissu, une étoffe, un non-tissé, un non-tissé consolidé en fibres naturelles, fibres synthétiques ou un mélange de ceux-ci, **caractérisée en ce que** le revêtement comprend en tant que composant essentiel au moins un polymère thermofusible linéaire, mais ne contient pas de cellulose précipitée ou régénérée, et **en ce que** le revêtement forme la face externe de l'enveloppe, le polymère thermofusible présentant une valeur MVR située dans la plage allant de 25 à 500 cm³ pour 10 min., mesurée à 190 °C sous une charge de 2,16 kg.

2. Enveloppe alimentaire selon la revendication 1, **caractérisée en ce que** le polymère thermofusible présente une valeur MVR située dans la plage allant de 100 à 450 cm³ pour 10 minutes, en particulier de 150 à 400 cm³ pour 10 minutes, mesurée respectivement à 190 °C sous une charge de 2,16 kg, le polymère thermofusible comprenant de préférence un polyester, une polyoléfine, de manière particulièrement préférée un PE-HD, un PE-DM, un PE-BD ou un polypropylène, un copolyester, un copolymère d'éthylène-acétate de vinyle, un poly(butyral de vinyle), un polyuréthane, un PVDC ou un mélange de ceux-ci.

3. Enveloppe alimentaire selon la revendication 1 ou 2, **caractérisée en ce que** le matériau de support se compose de fibres naturelles et/ou synthétiques, de manière particulièrement préférée de coton, fibranne, cellulose régénérée, soie, polyester, polyamide, polyoléfine, papier, polyacétate de vinyle, polyacrylonitrile, polychlorure de vinyle, d'un copolymère correspondant ou d'un mélange de ceux-ci.

4. Enveloppe alimentaire selon l'une ou plusieurs quelconques des revendications 1 à 3, **caractérisée en ce que** l'insert plat présente un poids de 3 à 400 g/m², de préférence de 10 à 130 g/m², de manière particulièrement préférée de 12 à 75 g/m².

5. Enveloppe alimentaire selon l'une ou plusieurs quelconques des revendications 1 à 4, **caractérisée en ce qu'**elle est plissée en bâton ou est confectionné en sections, qui sont fermées unilatéralement par un clip, un clip avec une boucle, ligature, nœud, collage, scellement, soudure, resserrage avec une couture droite ou courbée ou par une combinaison de plusieurs des procédés de fermeture susmentionnés.

6. Enveloppe alimentaire selon l'une ou plusieurs quelconques des revendications 1 à 5, **caractérisée en ce que** la tubulure est fabriquée à partir d'une bande plate par collage, couture, scellement ou soudure selon une forme droite ou autre.

7. Enveloppe alimentaire selon l'une ou plusieurs quelconques des revendications 1 à 6, **caractérisée en ce que** le côté non revêtu du matériau de support est imprégné d'au moins un milieu solide et/ou liquide, qui confère l'arôme, la couleur et/ou le goût à la saucisse, de préférence avec une fumée liquide et/ou sèche.

8. Enveloppe alimentaire selon l'une ou plusieurs quelconques des revendications 1 à 7, **caractérisée en ce que** le matériau de support et le revêtement sont incolores, **en ce que** le matériau de support sont teintés par des colorants ou des pigments colorés ou **en ce que** le matériau de support est incolore et présente un revêtement coloré.

9. Enveloppe alimentaire selon l'une ou plusieurs quelconques des revendications 1 à 8, **caractérisée en ce qu'**elle présente une ou plusieurs couches avec des propriétés barrière à l'oxygène et/ou à la vapeur d'eau.

10. Enveloppe alimentaire selon l'une ou plusieurs quelconques des revendications 1 à 9, **caractérisée en ce qu'**elle présente sur la face interne une imprégnation ou un revêtement, qui commande l'adhérence à un aliment se trouvant dans l'enveloppe.

11. Procédé de fabrication d'une enveloppe alimentaire selon l'une ou plusieurs quelconques des revendications 1 à 10, **caractérisé en ce que** pour améliorer l'adhérence composite, le matériau de support est préchauffé et/ou le matériau de support est soumis à une pression négative et/ou le matériau de support est désencollé et/ou un agent adhésif est utilisé et/ou le composite est calendré.

12. Utilisation de l'enveloppe alimentaire selon l'une ou plusieurs quelconques des revendications 1 à 10 en tant qu'enveloppe de saucisse artificielle, de préférence pour saucisse crue, saucisse à bouillir ou saucisse à cuire.
